# EUROPÄISCHE PATENTSCHRIFT

(11) **EP 3 173 208 B1**
(45) Veröffentlichungstag und Bekanntmachung des Hinweises auf die Patenterteilung: **31.10.2018**
(21) Anmeldenummer: 16199594.9
(22) Anmeldetag: 18.11.2016
(51) Int. Cl.: B29C 45/73, B29C 35/00

(54) **TEMPERIERVORRICHTUNG**
TEMPERING DEVICE
DISPOSITIF DE RÉGULATION THERMIQUE

(30) Priorität: 27.11.2015 AT 510202015
(43) Veröffentlichungstag der Anmeldung: 31.05.2017
(73) Patentinhaber: ENGEL AUSTRIA GmbH, 4311 Schwertberg (AT)
(72) Erfinder: Balka, Christoph, 2380 Perchtoldsdorf (AT)
(74) Vertreter: Torggler & Hofinger Patentanwälte

(56) Entgegenhaltungen:
- EP-A1- 2 762 290
- WO-A1-2014/132353
- DE-U1- 8 712 481
- JP-A- H03 230 913
- JP-A- 2000 257 800
- US-A- 5 591 385
- GRUNDFOS VERTRIEB: "Grundfos Industrie - Immer cool bleiben", INTERNET CITATION, Juli 2000 (2000-07), Seiten 1-4, XP002722690, Gefunden im Internet: URL:http://net.grundfos.com/Appl/WebCAPS/G rundfosliterature-5247.pdf [gefunden am 2014-04-02]

## Beschreibung

Die vorliegende Erfindung betrifft eine Temperiervorrichtung für ein Formwerkzeug oder Komponenten einer formgebenden Arbeitsmaschine mit den Merkmalen des Oberbegriffs des Anspruchs 1, eine formgebende Arbeitsmaschine mit einer solchen Temperiervorrichtung und ein Verfahren zum Temperieren eines Formwerkzeugs oder von Komponenten einer formgebenden Arbeitsmaschine mit den Merkmalen des Oberbegriffs des Anspruchs 10.

Die US 5,591,385 A1 offenbart ein Verfahren zum Temperieren eines Kunststoffspritzgießwerkzeugs, wobei ein Durchfluss an Temperiermedium auf Basis von gemessenen Durchflusswerten gesteuert wird.

Die EP 2 762 290 A1 offenbart ein Verfahren zur Temperierung eines Formwerkzeugs, wobei die Förderleistung eines Pumpensystems anhand gemessener Durchflussmengen oder Drücke gesteuert oder geregelt wird. In der JP 2000-257800 wird enbenfalls eine Steuerung nach einer Durchflussmenge durch ein Werkzeug für die Temperierung offenbart. in der DE 8 712 481 U1 wird offenbart, die Temperierung eines Formwerkzeugs unter Berücksichtigung der ins Formwerkzeug eintretenden und aus dem Formwerkzeug austretenden Wärmeströme zu realisieren.

Die folgende Diskussion des Standes der Technik erfolgt beispielhaft anhand einer Spritzgussmaschine als Spezialfall einer formgebenden Arbeitsmaschine und anhand eines Spritzgießwerkzeugs einer solchen Spritzgussmaschine als Beispiel für ein Formwerkzeug einer allgemeinen formgebenden Arbeitsmaschine. Die Offenbarung der folgenden Anmeldung ist aber nicht auf diesen Spezialfall beschränkt.

Unter Temperieren wird in der vorliegenden Anmeldung Kühlen oder Heizen verstanden.

Beim Stand der Technik wird die wenigstens eine Pumpe mit konstanter Förderleistung oder drehzahlgeregelt betrieben. Entweder man verwendet die sich durch die Förderleistung (Fördermenge oder Druck usw.) und den hydraulischen Widerstand der wenigstens einen Zweigleitung ergebende Durchflussmenge oder man setzt Drosseln ein, um eine gewünschte niedrigere Durchflussmenge zu erzielen.

Bei Verwendung einer Pumpe mit konstanter Förderleistung resultieren verschiedene Nachteile:
- ein konstant hoher Energieverbrauch,
- verringerte Lebensdauer des Pumpensystems,
- Kosten für die Rücktemperierung des Temperiermediums aufgrund eines zu hohen Volumenstroms,
- höhere Leckageanfälligkeit sowie
- unnötig hoher Druck im Temperiersystem.

Bei Verwendung einer drehzahlgeregelten Pumpe ist es speziell beim Einsatz mehrerer Temperierzweige, vor allem wenn diese mit Drosselvorrichtungen versehen sind, nicht einfach, den optimalen Betriebspunkt der Pumpe (hinsichtlich der Energie) einzustellen.

Aufgabe der Erfindung ist es, die oben beschriebenen Nachteile zumindest teilweise zu beheben.

Diese Aufgabe wird durch eine Temperiervorrichtung mit den Merkmalen des Anspruchs 1, eine formgebende Arbeitsmaschine mit einer solchen Temperiervorrichtung und ein Verfahren mit den Merkmalen des Anspruchs 10 gelöst. Vorteilhafte Ausführungsformen der Erfindung sind in den abhängigen Ansprüchen definiert.

Durch die Erfindung ist es möglich, die Temperiervorrichtung am optimalen Betriebspunkt (hinsichtlich der Energie) zu betreiben.

Der Drosselsteuer- oder Drosselregeleinrichtung wird eine Stellgröße in Abhängigkeit einer Regelgröße (z. B. eine bestimmte Durchflussmenge in den wenigstens zwei Temperierzweigen, ein bestimmter Druck in den wenigstens zwei Temperierzweigen, eine zu erreichende Temperatur im zu temperierenden Gegenstand, eine Temperaturdifferenz des Temperiermediums zwischen einem Vorlauf und dem Rücklauf der wenigstens zwei Temperierzweige) vorgegeben. In Abhängigkeit dieser Regelgröße gibt die Drosselsteuer- oder Drosselregel-einrichtung die Öffnungsgrade der mindestens zwei Drosselvorrichtungen vor. Der momentane Öffnungsgrad (Sollwert oder, falls eine entsprechende Messvorrichtung vorhanden ist, der Istwert) wird dazu verwendet, die Förderleistung des Pumpensystems einzustellen oder vorzugeben. Eine Veränderung dieser Förderleistung wirkt als Störgröße auf die Drosselsteuer- oder Drosselregeleinrichtung, die durch die Drosselsteuer- oder Drosselregeleinrichtung ausgeglichen wird.

### Ein Ausführungsbeispiel:

Liegt beispielsweise der Öffnungsgrad unter einem vorgegebenen Wert (bevorzugt 80 - 100%, d. h. fast völlig oder völlig geöffnet), wird die Förderleistung des Pumpensystems reduziert. Hierdurch verringert sich die Durchflussmenge (welche hier als Regelgröße für die Drosselsteuer- oder Drosselregeleinrichtung gewählt ist, alternativ könnten - wie oben angeführt - auch andere Regelgrößen verwendet werden) und die Drosselsteuer- oder Drosselregeleinrichtung erhöht die Öffnungsgrade der mindestens zwei Drosselvorrichtungen. Liegt der Öffnungsgrad noch immer unter dem vorgegebenen Wert für den Öffnungsgrad, wird die Förderleistung des Pumpensystems weiter reduziert. Dies geschieht so lange, bis der vorgegebene Wert für die Öffnungsgrade der mindestens zwei Drosselvorrichtungen erreicht oder überschritten wird (im Falle mehrerer Drosselvorrichtungen: bis der vorgegebene Wert von einer der Drosselvorrichtungen erreicht oder überschritten wird). Ist zwar der vorgegebene Wert für die Öffnungsgrade der mindestens zwei Drosselvorrichtungen erreicht oder überschritten, die Förderleistung des Pumpensystems für eine benötigte Durchflussmenge aber zu gering, wird die Förderleistung des Pumpensystems so lange erhöht, bis die benötigte Durchflussmenge gegeben ist.

Es ergibt sich ein optimaler Arbeitspunkt des Gesamtsystems aus Pumpensystem und der mindestens zwei Drosselvorrichtungen mit minimiertem hydraulischen Widerstand bei gleichzeitig minimaler Energieaufnahme des Pumpensystems.

Statt nur eines vorgegebenen Wertes für die Öffnungsgrade der mindestens zwei Drosselvorrichtungen können auch ein minimaler und ein maximaler Wert vorgegeben sein, sodass sich ein Regelband ergibt.

Die Einstellung der Förderleistung des Pumpensystems kann auf verschiedene Art und Weise erfolgen.

Es kann z. B. vorgesehen sein, dass eine Maschinensteuerung der formgebenden Arbeitsmaschine unter Verwendung der Öffnungsgrade der mindestens zwei Drosselvorrichtungen ein entsprechendes Steuer- oder Regelsignal an das Pumpensystem übermittelt. Es kann auch vorgesehen sein, dass das Pumpensystem selbst (oder eine andere außerhalb der formgebenden Arbeitsmaschine vorhandene Steuerung oder Regelung) eine Pumpensteuer- oder Pumpenregeleinrichtung aufweist, welche unter Verwendung der Öffnungsgrade der mindestens zwei Drosselvorrichtungen ein entsprechendes Steuer- oder Regelsignal an die wenigstens eine Pumpe des Pumpensystems oder einen Antrieb der wenigstens einen Pumpe des Pumpensystems übermittelt. Es kann auch vorgesehen sein, dass die Drosselsteuer- oder Drosselregeleinrichtung selbst einen entsprechenden Steuer- oder Regelbefehl an das Pumpensystem übermittelt. Es kann auch vorgesehen sein, dass ein Benutzer manuell eine Einstellung der Förderleistung des Pumpensystems vornimmt, in Abhängigkeit eines Signals, welches ihm die Richtung des vorzunehmenden Eingriffs anzeigt.

Als Temperiermedium ist bevorzugt Wasser (gasförmig oder flüssig) oder Öl vorgesehen. Es können jedoch auch andere Fluide, wie beispielsweise Kohlendioxid oder Stickstoff, verwendet werden. Das Temperiermedium kann kontinuierlich oder pulsartig gefördert werden.

Besonders bevorzugt ist vorgesehen dass, die Temperiervorrichtung als Beistellvorrichtung für eine formgebende Arbeitsmaschine ausgebildet ist und mehrere Temperierzweige aufweist. Die Beistellvorrichtung kann entweder freistehend neben der formgebenden Arbeitsmaschine angeordnet sein oder an dieser verbaut sein.

Die Pumpensteuer- oder Pumpenregeleinrichtung kann Bestandteil der Maschinensteuerung der formgebenden Arbeitsmaschine, einer externen Steuerung, Beistellvorrichtung oder eines zentralen Leitrechnersystems sein.

Die Drosselsteuer- oder Drosselregeleinrichtung kann Bestandteil der Maschinensteuerung der formgebenden Arbeitsmaschine, einer externen Steuerung, Beistellvorrichtung oder eines zentralen Leitrechnersystems sein.

Die Pumpensteuer- oder Pumpenregeleinrichtung und die Drosselsteuer- oder Drosselregeleinrichtung können als gemeinsame Steuer- oder Regeleinrichtung ausgebildet sein.

Das Pumpensystem kann Bestandteil der formgebenden Arbeitsmaschine, einer Beistellvorrichtung oder einer zentralen Medienversorgung sein.

Die Öffnungsgrade der mindestens zwei Drosselvorrichtungen kann stufenlos oder in Stufen veränderbar sein.

Besonders bevorzugt sind die mindestens zwei Drosselvorrichtungen als Ventil mit veränderbarem Öffnungsgrad ausgebildet. Besonders bevorzugt handelt es sich bei der Stellgröße der mindestens zwei Drosselvorrichtungen um Ventilstellungen. Besonders bevorzugt ist die wenigstens eine Pumpe des Pumpensystems und/oder die ggf. mindestens eine als Pumpe ausgebildete Drosselvorrichtung der mindestens zwei Drosselvorrichtungen als drehzahlgeregelte Pumpe ausgebildet.

Besonders bevorzugt wird als Steuer- oder Regelgröße die Durchflussmenge durch die wenigstens zwei Temperierzweige oder die Temperaturdifferenz zwischen Vorlauf und Rücklauf der wenigstens zwei Temperierzweige verwendet.

Es kann vorgesehen sein, dass die Pumpensteuer- oder Pumpenregel-einrichtung die Förderleistung des Pumpensystems in Abhängigkeit eines maximalen momentanen Öffnungsgrades der Öffnungsgrade der Drosselvorrichtungen unter Berücksichtigung des Wirkungsgrades des Pumpensystems steuert oder regelt.

Weitere Vorteile und Einzelheiten der Erfindung ergeben sich anhand der Figuren sowie der dazugehörigen Figurenbeschreibung. Es zeigen:
- Fig. 1: eine schematische Darstellung
- Fig. 2: ein Ausführungsbeispiel einer erfindungsgemäßen Temperiervorrichtung.

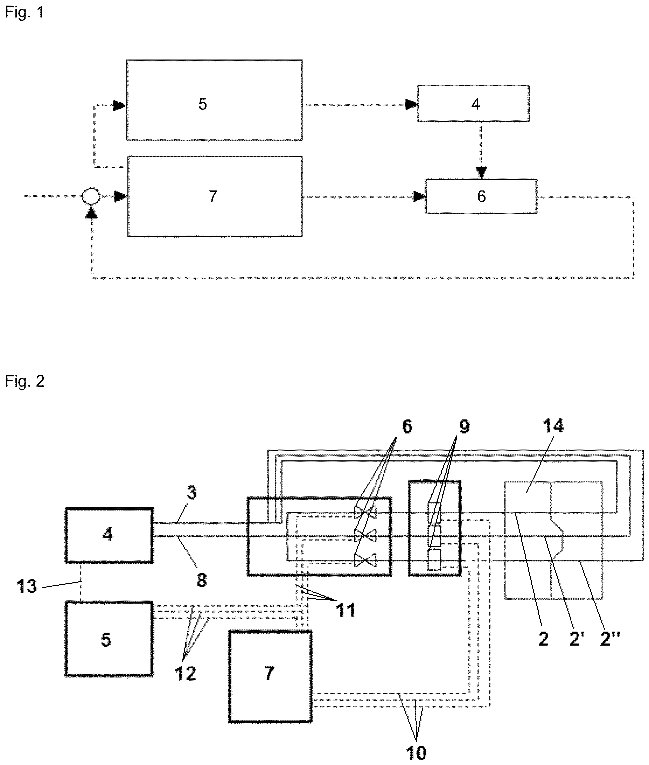

Fig. 1 zeigt schematisch eine Drosselvorrichtung 6 und eine Drosselregeleinrichtung 7 zur Regelung des Öffnungsgrades der Drosselvorrichtung 6 und ein Pumpensystem 4 mit einer Pumpenregeleinrichtung 5 zum Regeln der Fördermenge des Pumpensystems 4.

Die beiden Regelkreise sind insofern miteinander verbunden, als der momentane Öffnungsgrad der Drosselvorrichtung 6 (als Beispiel für eine Steuergröße) von der Drosselregeleinrichtung 7 an die Pumpenregeleinrichtung 5 übermittelt wird und die momentane Fördermenge des Pumpensystems 4 eine auf die Drosselvorrichtung 6 einwirkende Störgröße darstellt. Alternativ kann die Steuergröße natürlich auch von der Drosselvorrichtung 6 an die Pumpenregeleinrichtung 5 übermittelt werden.

Fig. 2 zeigt eine Temperiervorrichtung 1 für ein Formwerkzeug 14 einer nicht näher dargestellten formgebenden Arbeitsmaschine mit hier beispielhaft drei Temperierzweigen 2, 2', 2" (die Anzahl der Temperierzweige 2, 2', 2" ist natürlich nicht einschränkend zu verstehen).

Die Temperierzweige 2, 2', 2" sind mit einem Vorlauf 3 und einem Rücklauf 8 verbunden.

Es ist ein wenigstens eine drehzahlgeregelte Pumpe umfassendes Pumpensystem 4 zur Förderung von Temperiermedium im Vorlauf 3 vorhanden, dessen Förderleistung über eine Pumpensteuer- oder Pumpenregeleinrichtung 5 steuer- oder regelbar ist.

Für jeden der gezeigten Temperierzweige 2, 2', 2" ist eine einen veränderlichen Öffnungsgrad aufweisende Drosselvorrichtung 6 (hier in Form von Ventilen) vorhanden, über welche die Durchflussmenge des Temperiermediums im jeweiligen Temperierzweig 2, 2', 2" drosselbar ist. Die Öffnungsgrade der Drosselvorrichtungen 6 werden durch eine Drosselsteuer- oder Drosselregeleinrichtung 7 gesteuert oder geregelt. Über Sensoren 9 ist die Durchflussmenge messbar und der Drosselsteuer- oder Drosselregeleinrichtung 7 über Leitungen 10 zuführbar. Über Leitungen 11 kann die Drosselsteuer- oder Drosselregeleinrichtung 7 den Öffnungsgrad der einzelnen Drosselvorrichtungen 6 einstellen. Über Leitungen 12 werden die einzelnen Öffnungsgrade der Drosselvorrichtungen 6 der Pumpensteuer- oder Pumpenregeleinrichtung 5 zugeführt. Über die Leitung 13 kann die Pumpensteuer- oder Pumpenregeleinrichtung 5 die Förderleistung des Pumpensystems 4 einstellen.

Die Leitungen 10, 11, 12, 13 sind nur exemplarisch zu verstehen, jede Art der Datenübertragung ist möglich.

Solange die Öffnungsgrade aller Drosselvorrichtungen 6 einen festgelegten Wert unterschreiten, wird die Drehzahl der Pumpe des Pumpensystems 4 reduziert. Durch die Reduktion der Drehzahl verringern sich die Durchflussmengen, die Drosselsteuer- oder Drosselregeleinrichtung 7 reagiert mit einer schrittweisen Öffnung der Drosselvorrichtungen 6. Die Pumpensteuer- oder Pumpenregeleinrichtung 5 reagiert nun wieder auf die neuen Öffnungsgrade, bis der vorbestimmte Wert von einer der Drosselvorrichtungen 6 erreicht bzw. überschritten ist. Dadurch wird ein optimaler

Arbeitspunkt mit minimiertem hydraulischen Widerstand des Gesamtsystems bei gleichzeitig minimaler Energieaufnahme der Pumpe erreicht.

## Patentansprüche

1. Temperiervorrichtung (1) für ein Formwerkzeug (14) oder Komponenten einer formgebenden Arbeitsmaschine mit
- wenigstens zwei Temperierzweige (2, 2', 2"), welche mit einem Vorlauf (3) für ein Temperiermedium verbunden sind
- einem wenigstens eine Pumpe umfassenden Pumpensystem (4) zur Förderung von Temperiermedium im Vorlauf (3)
- einer Pumpensteuer- oder Pumpenregeleinrichtung (5) zur Steuerung oder Regelung der Förderleistung des Pumpensystems (4)
- mindestens einer einen veränderlichen Öffnungsgrad aufweisenden Drosselvorrichtung (6) in jedem der wenigstens zwei Temperierzweige (2, 2', 2") zur Drosselung einer Durchflussmenge des Temperiermediums in den wenigstens zwei Temperierzweigen (2, 2', 2")
- einer Steuer oder Regeleinrichtung (7) mit den Öffnungsgraden der mindestens zwei Drosselvorrichtungen (6) als Stellgröße und mit einer Regelgröße aus der Gruppe: Öffnungsgrad der Drosselvorrichtungen, Temperatur, Temperaturdifferenz, Durchfluss, Druck oder eine aus dieser Gruppe abzuleitende physikalische Größe,
**dadurch gekennzeichnet, dass** die Pumpensteuer- oder Pumpenregeleinrichtung (5) die Förderleistung des Pumpensystems (4) in Abhängigkeit der Öffnungsgrade der mindestens zwei Drosselvorrichtungen (6) steuert oder regelt.

2. Temperiervorrichtung nach Anspruch 1, wobei zumindest eine der mindestens zwei Drosselvorrichtungen (6) als Ventil ausgeführt ist.

3. Temperiervorrichtung nach wenigstens einem der vorangehenden Ansprüche, wobei zumindest eine der mindestens zwei Drosselvorrichtungen (6) als eine vom Pumpensystem (4) gesonderte Pumpe ausgeführt ist.

4. Temperiervorrichtung nach wenigstens einem der vorangehenden Ansprüche, wobei das Pumpensystem (4) die wenigstens eine Pumpe und einen Motor für die Pumpe umfasst.

5. Temperiervorrichtung nach wenigstens einem der vorangehenden Ansprüche, wobei die wenigstens eine Pumpe des Pumpensystems (4) und/oder die ggf. mindestens eine als Pumpe ausgebildete Drosselvorrichtung (6) der mindestens zwei Drosselvorrichtungen (6) als drehzahlgeregelte Pumpe ausgebildet ist.

6. Temperiervorrichtung nach wenigstens einem der vorangehenden Ansprüche, wobei das gesamte Regelsystem als kaskadierte Regelung ausgeführt ist wobei die äußere die Pumpensteuer- oder Pumpenregelung ist und die innere die Größen aus der Gruppe Öffnungsgrad der Drosselvorrichtungen, Temperatur, Temperaturdifferenz, Durchfluss, Druck oder eine aus dieser Gruppe abzuleitende physikalische Größe und somit die schnellere ist. (5).

7. Temperiervorrichtung nach einem der Ansprüche 1 bis 6, wobei die Pumpensteuer- oder Pumpenregeleinrichtung (5) die Förderleistung des Pumpensystems (4) in Abhängigkeit eines maximalen momentanen Öffnungsgrades der Öffnungsgrade der Drosselvorrichtungen (6) steuert oder regelt.

8. Temperiervorrichtung nach Anspruch 7, wobei die Pumpensteuer- oder Pumpenregeleinrichtung (5) die Förderleistung des Pumpensystems (4) in Abhängigkeit eines maximalen momentanen Öffnungsgrades der Öffnungsgrade der Drosselvorrichtungen (6) unter Berücksichtigung des Wirkungsgrades des Pumpensystems steuert oder regelt.

9. Formgebende Arbeitsmaschine, insbesondere Spritzgießmaschine, Druckgussmaschine oder Pressmaschine, mit einer Temperiervorrichtung nach wenigstens einem der vorangehenden Ansprüche.

10. Verfahren zum Temperieren eines Formwerkzeugs (14) oder von Komponenten einer formgebenden Arbeitsmaschine unter Verwendung:
- wenigstens zweier Temperierzweige (2, 2', 2"), welche mit einem Vorlauf (3) für ein Temperiermedium verbunden ist
- eines wenigstens eine Pumpe umfassenden Pumpensystems (4) zur Förderung von Temperiermedium im Vorlauf (3)
- mindestens einer einen veränderlichen Öffnungsgrad aufweisenden Drosselvorrichtung (6) zur Drosselung einer Durchflussmenge des Temperiermediums im wenigstens einen Temperierzweig (2, 2', 2") in jedem der wenigstens zwei Temperierzweige (2, 2', 2")
**dadurch gekennzeichnet, dass** die Förderleistung des Pumpensystems (4) in Abhängigkeit der Öffnungsgrade der mindestens zwei Drosselvorrichtungen (6) gesteuert oder geregelt wird.

## Claims

1. A temperature control apparatus (1) for a shaping tool (14) or components of a shaping working machine comprising
- at least two temperature control branches (2, 2', 2") connected to a feed (3) for a temperature control medium,
- a pump system (4) including at least one pump for conveying temperature control medium in the feed (3),
- a pump open-loop or closed-loop control device (5) for open-loop or closed-loop control of the delivery output of the pump system (4),
- at least one throttle device (6) in each of the at least two temperature control branches (2, 2', 2") having a variable degree of opening for throttling a quantitative through-flow of the temperature control medium in the at least two temperature control branches (2, 2', 2"), and
- an open-loop or closed-loop control device (7) with the degree of opening of the at least two throttle devices (6) as a setting value and with a control variable from the group: degree of opening of the throttle devices, temperature, temperature difference, through-flow, pressure or a physical value to be derived from that group,
**characterised in that** the pump open-loop or closed-loop control device (5) provides for open-loop or closed-loop control of the delivery output of the pump system (4) in dependence on the degrees of opening of the at least two throttle devices (6).

2. A temperature control apparatus as set forth in claim 1 wherein at least one of the at least two throttle devices (6) is in the form of a valve.

3. A temperature control apparatus as set forth in at least one of the preceding claims wherein at least one of the at least two throttle devices (6) is in the form of pump separate from the pump system (4).

4. A temperature control apparatus as set forth in at least one of the preceding claims wherein the pump system (4) includes the at least one pump and a motor for the pump.

5. A temperature control apparatus as set forth in at least one of the preceding claims wherein the at least one pump of the pump system (4) and/or the possibly at least one throttle device (6) of the at least two throttle devices (6) in the form of a pump is in the form of a rotary speed-controlled pump.

6. A temperature control apparatus as set forth in at least one of the preceding claims wherein the overall control system is in the form of a cascaded control means, wherein the outer one is the pump open-loop or closed-loop control means and the inner one is the values from the group consisting of the degree of opening of the throttle devices, temperature, temperature difference, through-flow, pressure or a physical value to be derived from that group and is thus the faster (5).

7. A temperature control apparatus as set forth in claim one of the claims 1 to 6 wherein the pump open-loop or closed-loop control device (5) provides for open-loop or closed-loop control of the delivery output of the pump system (4) in dependence on a maximum instantaneous degree of opening of the degrees of opening of the throttle devices (6).

8. A temperature control apparatus as set forth in claim 7 wherein the pump open-loop or closed-loop control device (5) provides for open-loop or closed-loop control of the delivery output of the pump system (4) in dependence on a maximum instantaneous degree of opening of the degrees of opening of the throttle devices (6) having regard to the efficiency of the pump system.

9. A shaping working machine, in particular an injection molding machine, a pressure die casting machine or a pressing machine having a temperature control apparatus as set forth in at least one of the preceding claims.

10. A method of temperature control of a shaping tool (14) or components of a shaping working machine, using:
- at least two temperature control branches (2, 2', 2") connected to a feed (3) for a temperature control medium,
- a pump system (4) including at least one pump for the delivery of temperature control medium in the feed (3), and
- at least one throttle device (6) having a variable degree of opening for throttling a quantitative through-flow of the temperature control medium in the at least one temperature control branch (2, 2', 2") in each of the at least two temperature control branches (2, 2', 2"),
**characterised in that** the delivery output of the pump system (4) is subjected to open-loop or closed-loop control in dependence on the degrees of opening of the at least two throttle devices (6).

## Revendications

1. Dispositif d'équilibrage de température (1) pour un outil de formage (14) ou des composants d'une machine de travail de modelage avec
- au moins deux branches d'équilibrage de température (2, 2', 2"), lesquelles sont reliées à une conduite d'alimentation (3) pour un milieu d'équilibrage de température
- un système de pompe (4) comprenant au moins une pompe pour acheminer le milieu d'équilibrage de température dans la conduite d'alimentation (3)
- un dispositif de commande de la pompe ou de réglage de la pompe (5) pour commander ou régler le débit du système de pompe (4)
- au moins un dispositif d'étranglement (6) présentant un degré d'ouverture variable dans chacune des au moins deux branches d'équilibrage de température (2, 2', 2") destiné à étrangler une quantité d'écoulement du milieu d'équilibrage de température dans les au moins deux branches d'équilibrage de température (2, 2', 2")
- un dispositif de commande ou de réglage (7) avec les degrés d'ouverture des au moins deux dispositifs d'étranglement (6) comme grandeur de positionnement et avec une grandeur de réglage tirée du groupe : degré d'ouverture des dispositifs d'étranglement, température, différence de température, débit, pression ou une grandeur physique découlant de ce groupe,
**caractérisé en ce que** le dispositif de commande ou de réglage de la pompe (5) commande ou règle le débit du système de pompe (4) en fonction des degrés d'ouverture des au moins deux dispositifs d'étranglement (6).

2. Dispositif d'équilibrage de température selon la revendication 1, dans lequel au moins un des au moins deux dispositifs d'étranglement (6) est réalisé comme soupape.

3. Dispositif d'équilibrage de température selon au moins l'une des revendications précédentes, dans lequel au moins un des au moins deux dispositifs d'étranglement (6) est réalisé comme une pompe distincte du système de pompe (4).

4. Dispositif d'équilibrage de température selon l'une des revendications précédentes, dans lequel le système de pompe (4) comprend la au moins une pompe et un moteur pour la pompe.

5. Dispositif d'équilibrage de température selon au moins l'une des revendications précédentes, dans lequel la au moins une pompe du système de pompe (4) et / ou le dispositif d'étranglement (6) conçu, le cas échéant, au moins comme une pompe, des au moins deux dispositifs d'étranglement (6) est conçu comme une pompe régulée en vitesse.

6. Dispositif d'équilibrage de température selon au moins l'une des revendications précédentes, dans lequel le système de réglage complet est réalisé comme un réglage en cascade, dans lequel le réglage externe est la commande de la pompe ou le réglage de la pompe et le réglage interne les grandeurs tirées du groupe : degré d'ouverture des dispositifs d'étranglement, température, différence de température, débit, pression ou une grandeur physique découlant de ce groupe et donc est le plus rapide (5) .

7. Dispositif d'équilibrage de température selon l'une des revendications 1 à 6, dans lequel le dispositif de commande ou de réglage de la pompe (5) commande ou règle le débit du système de pompe (4) en fonction d'un degré d'ouverture momentané maximal des degrés d'ouverture des dispositifs d'étranglement (6).

8. Dispositif d'équilibrage de température selon la revendication 7, dans lequel le dispositif de commande de la pompe ou de réglage de la pompe (5) commande ou règle le débit du système de pompe (4) en fonction d'un degré d'ouverture momentané maximal des degrés d'ouverture des dispositifs d'étranglement (6) en tenant compte du niveau d'efficacité du système de pompe.

9. Machine de travail de modelage, plus particulièrement presse d'injection, machine de coulée sous pression ou machine de pressage, avec un dispositif d'équilibrage de température selon au moins l'une des revendications précédentes.

10. Procédé pour l'équilibrage de température d'un outil de formage (14) ou de composants d'une machine de travail de modelage utilisant :
- au moins deux branches d'équilibrage de température (2, 2', 2"), lesquelles sont reliées à une conduite d'alimentation (3) pour un milieu d'équilibrage de température
- un système de pompe (4) comprenant au moins une pompe pour acheminer le milieu d'équilibrage dans la conduite d'alimentation (3)
- au moins un dispositif d'étranglement (6) présentant un degré d'ouverture variable destiné à étrangler une quantité d'écoulement du milieu d'équilibrage de température dans au moins une branche d'équilibrage (2, 2', 2") dans chacune des au moins deux branches d'équilibrage de température (2, 2', 2")
**caractérisé en ce que** le débit du système de pompe (4) est commandé ou réglé en fonction des degrés d'ouverture des au moins deux dispositifs d'étranglement (6).
